# DEMANDE DE BREVET EUROPEEN

(11) **EP 4 722 503 A1**
(43) Date de publication de la demande: **08.04.2026**
(21) Numéro de dépôt: 25204205.6
(22) Date de dépôt: 24.09.2025
(51) Int. Cl.: F01M 11/02, F16N 21/00, F16N 25/04, F01D 25/18, F16H 57/04, F02C 7/06, F02C 7/36

(54) **ROUET DE LUBRIFICATION POUR UN REDUCTEUR DE VITESSE DE TURBOMACHINE**

(30) Priorité: 03.10.2024 FR 2410649
(71) Demandeur: Safran Transmission Systems, 92700 Colombes (FR)
(72) Inventeur: BOSSET,, Romain Thierry, 77550 MOISSY-CRAMAYEL (FR); FRANCOIS,, Loïc, 77550 MOISSY-CRAMAYEL (FR); LAISNEZ,, Frederic Nicolas François, 77550 MOISSY-CRAMAYEL (FR); PENNACINO,, Antoine Jacques Marie, 77550 MOISSY-CRAMAYEL (FR)
(74) Mandataire: Gevers & Orès

(57) **Abrégé**

Rouet (230) de lubrification pour un réducteur de vitesse (110) de turbomachine, comportant :
- une cavité annulaire (238) de passage d'huile qui s'étend autour dudit axe (A),
- une lumière annulaire (248) d'alimentation de ladite cavité (238), et
- des canalisations (143, 145) de passage d'huile par centrifugation depuis la cavité (238) jusque dans les canalisations (143, 145), et
- un rebord tronconique (300) de collecte d'huile au niveau de ladite lumière (248), le rouet (230) étant formé par l'assemblage d'au moins deux pièces.

## Description

### Domaine technique de l'invention

La présente invention concerne notamment un rouet de lubrification pour un réducteur de vitesse de turbomachine, en particulier d'aéronef, ainsi qu'un réducteur et une turbomachine comportant un tel rouet.

### Arrière-plan technique

L'état de la technique dans ce domaine comprend notamment les documents FR-A1-3 036 763, FR-A1-3 047 279, FR-A1-3 041 054, FR-A1-3 065 268, FR-A1-3 065 270, FR-A1-3 065 773, WO-A1-2015/008000, et WO-A1-2018/185186.

Le rôle d'un réducteur mécanique est de modifier le rapport de vitesse et de couple entre l'axe d'entrée et l'axe de sortie d'un système mécanique.

Les nouvelles générations de turbomachines à double flux, notamment celles ayant un très haut taux de dilution, comportent un réducteur mécanique pour entraîner un arbre d'une soufflante aussi appelé « fan ». De manière usuelle, le réducteur a pour but de transformer la vitesse de rotation dite rapide de l'arbre d'une turbine de puissance en une vitesse de rotation plus lente pour l'arbre entraînant la soufflante.

Un tel réducteur comprend un pignon central, appelé solaire, une couronne et des pignons appelés satellites, qui sont en prise entre le solaire et la couronne. Les satellites sont maintenus par un châssis appelé porte-satellites. Le solaire, la couronne et le porte-satellites sont des planétaires car leurs axes de révolution coïncident avec un axe longitudinal de la turbomachine. Les satellites ont chacun un axe de révolution différents équirépartis sur le même diamètre de fonctionnement autour de l'axe des planétaires. Ces axes sont parallèles à l'axe longitudinal.

Il existe plusieurs architectures de réducteur. Dans l'état de l'art des turbomachines à double flux, les réducteurs sont de type planétaire ou épicycloïdal. Il existe dans d'autres applications similaires, des architectures dites différentielles ou compound.
- Sur un réducteur planétaire, le porte-satellites est fixe et la couronne constitue l'arbre de sortie du dispositif qui tourne dans le sens inverse du solaire.
- Sur un réducteur épicycloïdal, la couronne est fixe et le porte-satellites constitue l'arbre de sortie du dispositif qui tourne dans le même sens que le solaire.
- Sur un réducteur différentiel, aucun élément n'est fixé en rotation. La couronne tourne dans le sens contraire du solaire et du porte-satellites.

Les réducteurs peuvent être composés d'un ou plusieurs étages d'engrènement. Cet engrènement est assuré de différentes façons comme par contact, par friction ou encore par champs magnétique.

Il existe plusieurs types d'engrènement par contact comme avec des dentures droites, hélicoïdales ou en chevron.

Il existe plusieurs solutions de lubrification d'un tel réducteur.

La figure 1 illustre un porte-satellites 10 tel que décrit dans la demande FR-A1-3 036 763. Ce porte-satellites 10 comprend un corps cylindrique 12 relié à une extrémité longitudinale à une paroi annulaire 14 de support d'axes 16 parallèles de rotation des satellites 18. Les axes 16 sont régulièrement répartis autour de l'axe A de rotation du porte-satellites et sont solidaires à l'une de leurs extrémités longitudinales de la paroi annulaire 14 précitée. Un rouet de lubrification 20 est rapporté et fixé aux extrémités longitudinales opposées des axes 16.

Dans le cas représenté, le rouet de lubrification 20 est solidaire du porte-satellites 10 du fait de sa liaison aux axes 16 de support des satellites 18. Le rouet de lubrification 20 est donc destiné à être mis en rotation en fonctionnement autour de l'axe A en étant solidarisé au rotor du réducteur.

Le rouet de lubrification 20 a une forme générale annulaire autour de l'axe A et comporte à sa périphérie externe des raccords hydrauliques aux axes 16 de rotation des satellites 18. Le rouet 20 comprend des moyens de lubrification, d'une part, des paliers montés entre les axes 16 et les satellites 18, et, d'autre part, des dents d'engrènement des satellites 18 et du solaire 22. Ces moyens de lubrification comportent une gorge annulaire 24 située à la périphérie interne du rouet 20 et débouchant radialement vers l'intérieur, c'est-à-dire vers l'axe A.

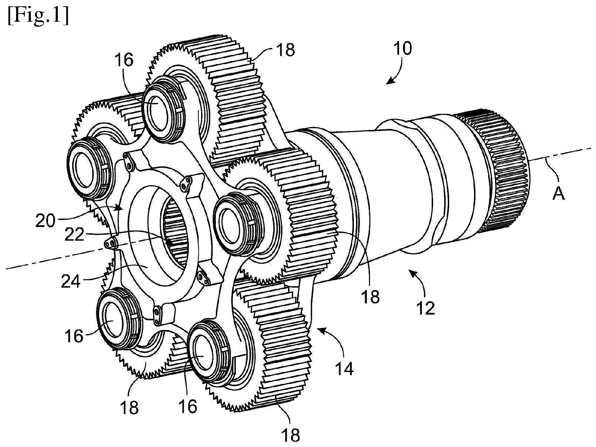

Des gicleurs de lubrifiant, portés par un stator du réducteur ou de la turbomachine, sont disposés radialement à l'intérieur du rouet (ils ne sont pas représentés dans la figure 1), et projettent du lubrifiant radialement vers l'extérieur directement dans la gorge 24 du rouet, pour alimenter les moyens de lubrification.

Le lubrifiant est amené jusqu'aux gicleurs par une pompe d'un groupe de lubrification de la turbomachine, qui délivre un débit prédéterminé de lubrifiant aux gicleurs. Avec la technologie actuelle décrite ci-dessus, le lubrifiant projeté dans la gorge est acheminé jusqu'aux moyens de lubrification par effet centrifuge uniquement.

Le rouet distribue donc de l'huile sous pression dans le réducteur en se servant des forces centrifuges générées en fonctionnement.

Dans le document FR-A-3 103 241, le rouet comprend à sa périphérie interne une cavité annulaire qui est alimentée en huile par des gicleurs qui projettent de l'huile axialement dans la cavité à travers une lumière annulaire du rouet. La cavité est en communication fluidique avec des canalisations radiales pour l'acheminement de l'huile par effet centrifuge jusqu'aux éléments à lubrifier du réducteur.

La présente demande s'intéresse plus particulièrement à cette dernière technologie et propose un perfectionnement qui permet notamment d'en faciliter la fabrication. Le rouet a en effet une périphérie interne de forme relativement complexe qui est difficile à obtenir de fonderie. Une solution pourrait consister à la réaliser par fabrication additive mais cette solution est onéreuse et difficilement industrialisable.

Par ailleurs, lorsque la vitesse de rotation du rouet est faible, les forces centrifuges auxquelles l'huile est soumise en fonctionnement sont faibles et donc l'huile peut s'écouler lentement à travers les canalisations radiales du rouet. Dans le cas où le débit d'huile fourni par les gicleurs est supérieur au débit de circulation de l'huile dans les canalisations par effet centrifuge, il y a un stockage d'huile dans la cavité dont le traitement peut être aménagé pour optimiser la lubrification.

La présente invention propose une solution à au moins une partie des problèmes évoqués ci-dessus, qui est simple, efficace et économique.

### Résumé de l'invention

L'invention propose un rouet de lubrification pour un réducteur de vitesse de turbomachine, en particulier d'aéronef, ledit rouet étant destiné à être mis en rotation autour d'un axe et ayant une forme générale annulaire autour dudit axe, le rouet comportant :
- à sa périphérie interne une cavité annulaire de passage d'huile qui s'étend autour dudit axe,
- à sa périphérie interne une lumière annulaire d'alimentation en huile qui s'étend autour dudit axe et qui débouche en direction axiale dans ladite cavité en vue de son alimentation en huile, et
- des canalisations de passage d'huile qui s'étendent radialement par rapport audit axe et dont des extrémités radialement internes sont reliées à ladite cavité en vue du passage d'huile par centrifugation depuis la cavité jusque dans les canalisations,
   caractérisé en ce que la périphérie interne du rouet comporte un rebord tronconique de collecte d'huile au niveau de ladite lumière, et en ce que ce rebord tronconique s'étend autour dudit axe et est formé par une première pièce annulaire rapportée et fixée axialement dans un corps annulaire qui définit au moins une partie de la cavité et des canalisations.

Le rebord tronconique est configuré pour guider et accueillir de l'huile, tout en permettant de retenir l'huile en particulier lorsque le débit d'huile qui alimente le rouet est supérieur au débit d'huile qui circule à travers ses canalisations. Le rebord peut être saillant axialement côté amont de l'alimentation en huile par rapport à la lumière. Il peut aussi être saillant radialement par rapport à la périphérie intérieure de la lumière et de la cavité. L'aménagement du rebord améliore l'alimentation en huile mais peut nécessiter une conception inhabituelle du rouet, en particulier pour gérer les assemblages et les étanchéités. Par ailleurs, le rouet est formé par l'assemblage d'au moins une pièce annulaire et d'un corps annulaire, la pièce comportant le rebord tronconique. Ceci permet de faciliter la fabrication du rouet et d'envisager des modes de fabrication du rouet autres que par fabrication additive.

Le rouet selon l'invention peut comprendre une ou plusieurs des caractéristiques suivantes, prises isolément les unes des autres, ou en combinaison les unes avec les autres :
-- ledit élément tronconique est une surface ou formé par une surface ;
-- ledit élément tronconique est formé par des bords inclinés d'ailettes ; ces ailettes ayant pour fonction d'assurer un entrainement de l'huile autour de l'axe ;
   - ladite cavité comprend à sa périphérie interne un élément tronconique qui s'étend autour dudit axe et dont une extrémité longitudinale de plus petit diamètre est reliée à une extrémité longitudinale de plus petit diamètre dudit rebord tronconique ;
   - ledit élément tronconique est formé par ledit corps ou par ladite première pièce ;
   - ladite cavité est délimitée axialement par deux parois latérales annulaires, une première de ces parois ayant sa périphérie interne qui délimite intérieurement ladite lumière ; cette première paroi peut être assimilée à une paroi de fermeture frontale de la cavité, dans la mesure où elle est située du côté de l'alimentation en huile ;
   - ladite première paroi est située axialement entre l'élément tronconique et le rebord tronconique ;
   - ladite première paroi est formée par ledit corps ou par ladite première pièce ou par une seconde pièce annulaire rapportée et fixée axialement sur ledit corps ;
   - lorsque la première paroi est formée par ladite première pièce, la première paroi et la première pièce sont reliées ensemble par une rangée annulaire de doigts de liaison qui traversent radialement la cavité et/ou la lumière ;
   - une seconde des parois latérales a sa périphérie interne qui est reliée à une extrémité longitudinale de plus grand diamètre de ledit élément tronconique ; cette seconde paroi peut être assimilée à une paroi intérieure dorsale de la cavité, dans la mesure où elle est située du côté opposé à l'alimentation en huile ;
   - ladite première pièce comprend un rebord cylindrique de centrage qui comprend une surface cylindrique externe apte à coopérer par centrage avec une surface cylindrique interne dudit corps ;
   - lesdites surfaces cylindriques sont situées à la périphérie interne du rouet ;
   - au moins un joint torique d'étanchéité est monté dans une gorge annulaire de l'une des surfaces cylindriques pour coopérer à étanchéité avec l'autre des surfaces cylindriques ;
   - ladite première pièce est fixée au corps par soudage ou vissage ;
   - la lumière a un diamètre interne qui est supérieur au diamètre externe du rebord tronconique ;
   - le diamètre interne de la lumière est inférieur à un diamètre externe de l'élément tronconique ;
-- au moins certaines des canalisations communiquent avec des canaux axiaux de passage d'huile et sont bouchés à leurs extrémités radialement externes par ledit corps ou par des bouchons rapportés ;
-- le rebord s'évase axialement du côté opposé à la cavité ;
-- le rebord a une extrémité libre de plus grand diamètre qui est situé axialement du côté opposé à la cavité.

La présente invention concerne également un réducteur de vitesse pour une turbomachine, ce réducteur comportant un solaire mobile en rotation autour d'un axe, une couronne qui s'étend autour de l'axe et du solaire, et des satellites qui sont situés entre le solaire et la couronne et engrenés avec le solaire et la couronne, les satellites étant portés par un porte-satellites qui est centré sur l'axe et qui est mobile en rotation autour de cet axe, dans lequel un rouet tel que décrit ci-dessus est fixé coaxialement au porte-satellites en vue de la lubrification des satellites et/ou des engrènements. La présente invention concerne également une turbomachine, en particulier d'aéronef, comportant un réducteur tel que décrit ci-dessus ainsi qu'au moins un gicleur d'huile qui est configuré pour projeter un jet d'huile dans ladite cavité, en traversant axialement ladite lumière et en passant radialement à l'extérieur du rebord tronconique.

### Brève description des figures

D'autres caractéristiques et avantages ressortiront de la description qui suit d'un mode de réalisation non limitatif de l'invention en référence aux dessins annexés sur lesquels :
[Fig.1] la figure 1 est une vue schématique en perspective d'un porte-satellites de la technique antérieure,
[Fig.2] La figure 2 représente schématiquement une coupe axiale d'une turbomachine utilisant l'invention ;
[Fig.3] La figure 3 présente une vue détaillée en coupe d'un réducteur à train épicycloïdal ;
[Fig.4] La figure 4 est une vue éclatée, en perspective, du réducteur de la figure 3 ;
[Fig.5] La figure 5 présente une coupe schématique d'un rouet du réducteur de la figure 3 ;
[Fig.6] la figure 6 est une vue schématique en coupe axiale d'un rouet de lubrification selon un premier mode de réalisation de l'invention ;
[Fig.7] la figure 7 est une vue schématique en coupe axiale d'un rouet de lubrification selon un deuxième mode de réalisation de l'invention ;
[Fig.8] la figure 8 est une vue schématique en coupe axiale d'un rouet de lubrification selon un troisième mode de réalisation de l'invention ;
[Fig.9] la figure 9 est une vue schématique en coupe axiale d'un rouet de lubrification selon un quatrième mode de réalisation de l'invention.

### Description détaillée de l'invention

La figure 1 a été décrite dans ce qui précède et représente la technique antérieure à la présente invention.

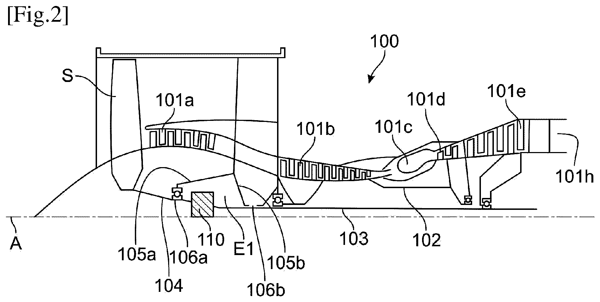

Les figures 2 à 5 illustrent la technique antérieure telle que décrite dans le document FR-A1-3 041 054.

La figure 1 montre une turbomachine 100 qui comporte, de manière classique, une hélice de soufflante S, un compresseur basse pression 101a, un compresseur haute pression 101b, une turbine haute pression 101d, une turbine basse pression 101e et une tuyère d'échappement 101h. Le compresseur haute pression 101b et la turbine haute pression 101d sont reliés par un arbre haute pression 102 et forment avec lui un corps haute pression (HP). Le compresseur basse pression 101a et la turbine basse pression 101e sont reliés par un arbre basse pression 103 et forment avec lui un corps basse pression (BP).

L'hélice de soufflante S est entraînée par un arbre de soufflante 104 qui est couplé à l'arbre BP 103 au moyen d'un réducteur 110 à train épicycloïdal représenté ici schématiquement.

Le réducteur 110 est positionné dans la partie amont de la turbomachine. Dans la présente demande, les termes « amont » et « aval » font référence à l'écoulement des gaz dans la turbomachine.

Une structure fixe comportant schématiquement, ici, une partie amont 105a et une partie aval 105b est agencée de manière à former une enceinte E1 entourant le réducteur 110. Cette enceinte E1 est ici fermée en amont par des joints au niveau d'un palier 106a permettant la traversée de l'arbre de soufflante 104, et en aval par des joints au niveau de la traversée 106b de l'arbre BP 103.

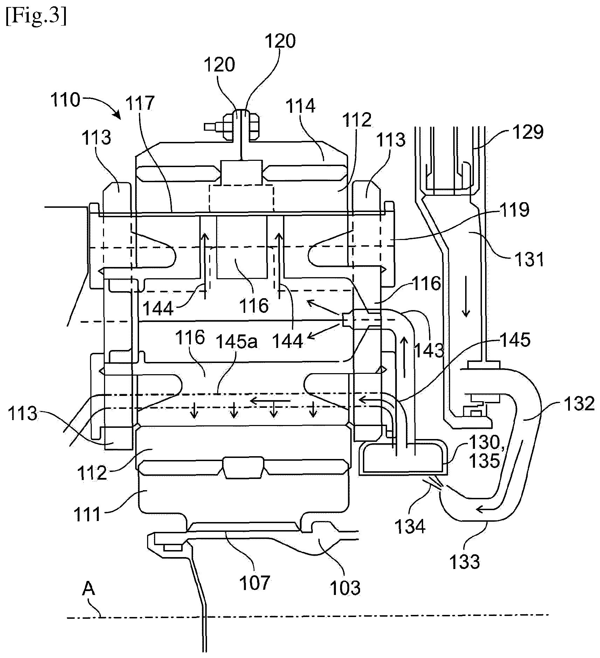

En référence aux figures 2 et 3, le réducteur est enfermé dans une couronne 114 qui est fixée par l'intermédiaire d'un carter de support 120 à ladite structure fixe 105a, 105b avec des moyens souples agencés pour lui permettre de suivre les mouvements éventuels de l'arbre de soufflante 104, dans certains cas de fonctionnement dégradés par exemple. Ces moyens de fixation sont connus de l'homme du métier et ne sont pas détaillés ici. Une brève description peut en être trouvée par exemple dans le document FR-A1-2 987 416.

Le réducteur 110 de l'exemple considéré embraye d'une part sur l'arbre BP 103 par l'intermédiaire de cannelures 107 qui entraînent un pignon d'engrenage planétaire, appelé solaire 111, et d'autre part sur l'arbre de soufflante 104 qui est attaché à un porte-satellites 113. Classiquement, le solaire 111, dont l'axe de rotation A est confondu avec celui de la turbomachine, entraîne une série de pignons de satellites 112, qui sont répartis régulièrement sur la circonférence du réducteur 110. Le nombre de satellites 112 est généralement défini entre trois et six. Les pignons de satellites 112 tournent aussi autour de l'axe A de la turbomachine, en engrenant sur des dents internes de la couronne 114, qui est montée fixe par rapport à la turbomachine, par l'intermédiaire du carter de support 120. Chacun des satellites 112 tourne librement autour d'un axe de satellite 116 relié au porte-satellite 113, à l'aide d'un palier qui peut être lisse, comme représenté sur la figure 3, ou un palier à éléments roulants (roulements à billes ou à rouleaux).

La rotation des satellites 112 autour de leur axe de satellite 116, du fait de la coopération de leurs pignons avec les dents de la couronne 114, entraîne la rotation du porte-satellites 113 autour de l'axe A, et par conséquent celle de l'arbre de soufflante 104 qui lui est lié, à une vitesse de rotation qui est inférieure à celle de l'arbre BP 103.

L'entraînement de l'arbre de soufflante 104 par le porte-satellites 113 est assuré par une série de doigts de centrage 117, répartis régulièrement sur la circonférence du réducteur 110, qui s'étendent axialement de l'extrémité aval de l'arbre de soufflante 104 et qui s'enfoncent dans des alésages pratiqués dans le porte-satellites 113. Le porte-satellites 113 s'étend symétriquement de part et d'autre des axes de satellite 116 et forme une enceinte dans laquelle pourra être mise en œuvre une fonction de lubrification des engrenages. Des douilles 119 de fermeture, aux extrémités des axes de satellites 116, permettent de fermer cette enceinte au niveau des paliers des satellites 112.

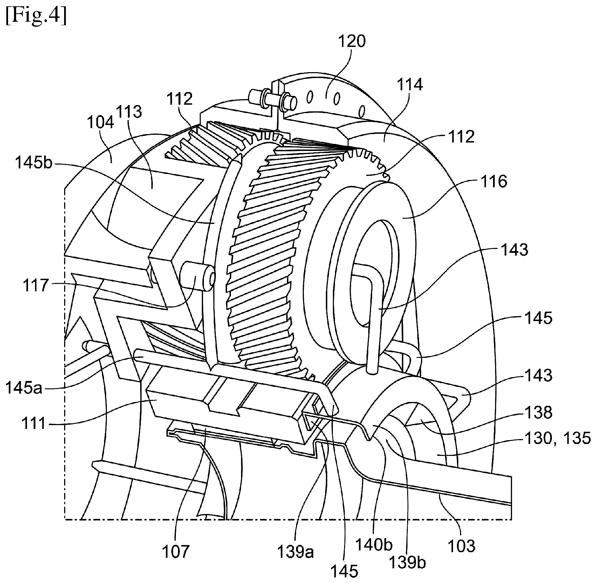

La figure 3 montre, avec la figure 4, l'acheminement de l'huile vers le réducteur 110 et son cheminement à l'intérieur de celui-ci. Des flèches montrent sur la figure 3 le cheminement suivi par l'huile depuis, sur cet exemple, un réservoir tampon 131 lié à la structure fixe de la turbomachine, jusqu'aux pignons et aux paliers à lubrifier. Le dispositif de lubrification comporte schématiquement trois parties qui vont être décrites ci-après successivement, une première partie liée à la structure fixe et délivrant l'huile vers les parties tournantes du réducteur 110, un rouet tournant avec le porte-satellites 113 réceptionnant cette huile, et des circuits de distribution d'huile alimentés en huile par le rouet pour l'acheminer vers les endroits à lubrifier. La première partie comporte au moins un injecteur 132 dont l'extrémité calibrée est resserrée pour former un gicleur 133. L'huile est amenée vers l'injecteur par une canalisation d'acheminement 129, en provenance du réservoir du moteur (non représenté). Un réservoir tampon 131 peut être interposé à côté du réducteur 110 sur la canalisation, de préférence en partie haute de façon à ce que l'huile puisse s'écouler vers le centre du réducteur par gravité. Le gicleur 133 éjecte l'huile sous la forme d'un jet 134, qui se forme sous la pression produite conjointement par la pompe d'alimentation (non représentée) et par le poids de la colonne d'huile située au-dessus de lui. Le gicleur 133 est positionné ici radialement à l'intérieur du porte-satellites 113 par rapport à l'axe A et le jet 134 est orienté avec une composante radiale dirigée vers l'extérieur du réducteur 110.

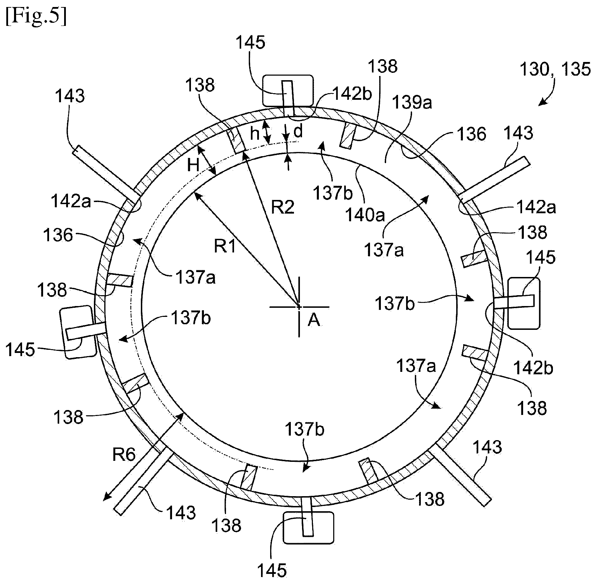

En référence aux figures 4 et 5, le rouet 130 de réception de l'huile lié au porte-satellites 113 comporte essentiellement une coupelle cylindrique 135, ici à section radiale en U, dont l'ouverture en U est orientée en direction de l'axe de rotation A. Le rouet 130 est agencé sur le porte-satellites 113 de manière à ce que le fond 136 du U de la coupelle 135 recueille le jet d'huile 134 éjecté par le gicleur 133.

La coupelle 135 du rouet 130 est ici divisée en une succession circonférentielle de cuvettes 137a, 137b séparées par des parois 138 orientées radialement et s'étendant axialement entre les deux parois latérales 139a, 139b du U formé par la coupelle 135. Sur l'exemple présenté, les parois de séparation circonférentielle 138 délimitent deux séries alternées de quatre cuvettes 137a, 137b, avec une extension circonférentielle identique dans une série mais différente d'une série à l'autre.

Par centrifugation, lorsque le rouet 130 tourne avec le porte-satellites 113, l'huile réceptionnée sur le fond 136 de la coupelle 135 est entraînée en rotation et mise en pression entre le fond 136 et les parois latérales 139a, 139b de la coupelle 135. Chaque cuvette 135a, 135b, en passant successivement devant le gicleur 133 au cours de la rotation, recueille une quantité d'huile proportionnelle à son extension circonférentielle. En effet, les bords radialement intérieurs des parois 139a-139b-138 d'une cuvette 137a, 137b définissent une surface d'entrée de la cuvette selon la direction radiale. Cette huile reste confinée entre les parois 138, 139a, 139b de la cuvette 137a, 137b tant que le niveau d'huile par rapport au fond 136 reste inférieur à la hauteur minimale h des parois 138 de celle-ci par rapport au fond 136. Les bords radiaux internes 140a, 140b des parois latérales 139a, 139b sont sensiblement circulaires. Leur rayon R1 définit une profondeur générale H de la coupelle 135 par rapport au fond 136. De préférence, les parois de séparation circonférentielle 138 ont un bord radial interne 141 situé à une distance R2 de l'axe A légèrement supérieure au rayon R1 des bords internes 140a, 140b des parois latérales 139a, 139b. La hauteur h des parois 138 de séparation circonférentielle par rapport au fond 136 des cuvettes 137a, 137b est donc légèrement inférieure à la hauteur H des parois latérales 139a, 139b par rapport à ce même fond 136.

Par ailleurs le fond 136 de chaque cuvette 137a, 137b comporte une ouverture 142a, 142b qui communique avec une canalisation 143, 145 d'un circuit de distribution d'huile installé sur le porte-satellites 113.

En référence aux figures 4 et 5, les circuits de distribution d'huile sont ici de deux types. Une première série de circuits de distribution d'huile correspond à des premières canalisations 143, qui sont réparties régulièrement sur la circonférence du réducteur 110 et en nombre égal à celui des satellites 112. Ces canalisations 143 partent radialement de l'ouverture 142a du fond de la première série de cuvettes 137a et pénètrent dans l'enceinte interne de chaque arbre de satellite 116, qui est refermée par le porte-satellites 113. L'huile qui circule dans les premières canalisations 143 pénètre dans la cavité interne de chaque axe de satellite 116 puis passe, du fait de la force centrifuge, dans des canaux de guidage 144, qui traversent ces axes de satellite 116 en étant orientés radialement. Ces canaux 144 débouchent à la périphérie des axes de satellites 116, au niveau des paliers supportant les pignons des satellites 112 et assurent ainsi la lubrification de ces paliers (figure 3).

La deuxième série de circuits de distribution d'huile comprend des secondes canalisations 145 qui cheminent, depuis les ouvertures 142b du fond des cuvettes 137b de la deuxième série de cuvettes entre les satellites 112 et se divisent en plusieurs canaux 145a, 145b. Les canaux 145a, 145b acheminent l'huile vers les engrenages formés par les pignons des satellites 112 et le solaire 111, d'une part, et les pignons des satellites 112 et la couronne externe 114, d'autre part. Chaque canal 145a s'étend axialement le long des pignons d'un satellite 112, entre ceux-ci et le solaire 111, et forme une rampe de lubrification sur toute la largeur des pignons. Le canal 145b, qui alimente l'engrenage entre la couronne 114 et les pignons des satellites 112, projette son huile au centre du cylindre formé par chaque satellite 112. Comme représenté, chaque satellite 112 est réalisé sous la forme de deux pignons parallèles. Leur denture est orientée en diagonale par rapport à l'axe de rotation du satellite 112, de façon à leur donner une fonction de rainures dans lesquelles l'huile est entraînée, depuis le milieu du cylindre jusqu'à sa périphérie, pour lubrifier l'engrenage sur toute sa largeur.

Les premiers circuits de distribution d'huile 143-144 qui lubrifient les paliers supportant les satellites ont besoin d'acheminer un débit d'huile plus important que les deuxièmes circuits 145-145a-145b. Pour cette raison, l'extension circonférentielle des cuvettes 137a de la première série, qui leur correspondent, est plus importante que celle des cuvettes 137b de la deuxième série. Ici, un rapport de deux tiers à un tiers est recherché dans le débit d'huile en fonctionnement nominal ; l'extension circonférentielle des deux séries de cuvettes 137a, 137b reprend sensiblement ce rapport.

L'ensemble a ici été présenté en se référant à une architecture de réducteur 110 à quatre satellites 112 avec deux séries de circuits de distribution d'huile 143-144, 145-145a-145b de types différents. Pour d'autres architectures de réducteurs, le nombre de cuvettes par série peut être différent. De même le nombre de séries de cuvettes ayant des extensions circonférentielles semblables peut être différent, suivant les types de circuits de distribution d'huile. Par exemple, les deuxièmes circuits de distribution d'huile pourraient être subdivisés en deux, l'un dédié à l'engrenage des pignons des satellites 112 avec le solaire 111 et l'autre dédié à l'engrenage avec la couronne 114. Dans ce cas, une variante de réalisation du rouet de récupération d'huile est envisageable avec trois séries de cuvettes d'extensions circonférentielles différentes.

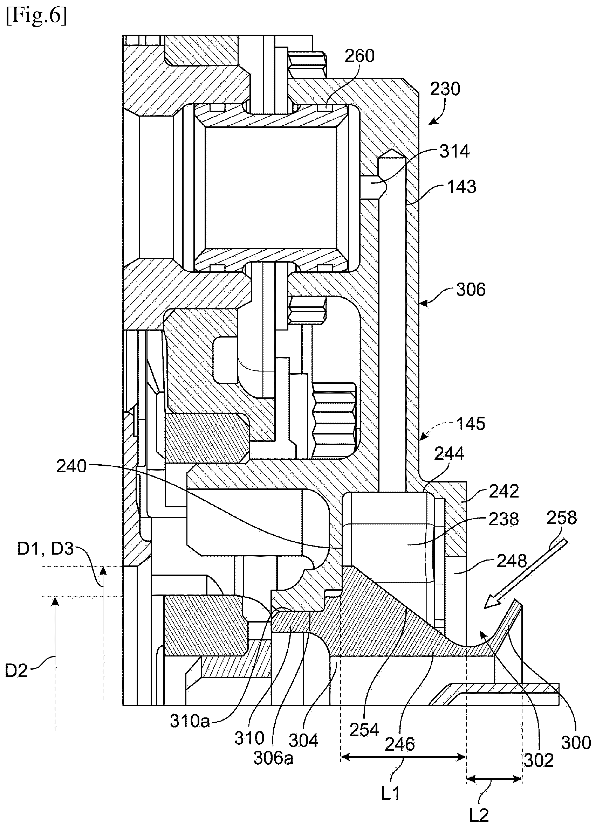

Les figures 6 à 9 illustrent plusieurs modes de réalisation d'un rouet 230 selon l'invention.

Le rouet 230 comprend des caractéristiques décrites dans ce qui précède et qui sont désignées par les mêmes références aux figures 3 à 5. Il s'agit notamment des canalisations 143 et des canalisations 145

Le rouet 230 a une forme générale annulaire autour de l'axe A précité qui n'est pas visible aux figures 6 à 9.

Le rouet 230 comprend des moyens de support des axes 116 de rotation des satellites du réducteur, ces moyens de support étant formés par des embouts 260 cylindriques engagés dans des cavités internes de ces axes 116. Le rouet 230 comporte en outre des moyens de lubrification de dentures des satellites et des paliers des axes 116, qui comportent notamment les canalisations 143, 145 précitées.

Les moyens de lubrification comportent en outre une cavité annulaire 238 située à la périphérie interne du rouet 230 et reliée aux canalisations 143, 145. Les canalisations 143 s'étendent sensiblement radialement entre la cavité 238 et les axes 116 en vue de leur alimentation en huile. Les canalisations 145 peuvent s'étendre sensiblement radialement entre la cavité 238 et des orifices de montage de gicleurs ou des canaux 145a, 145b tels que ceux décrits dans ce qui précède en relation avec les figures 3 à 5. La cavité 238 annulaire est délimitée axialement par deux parois annulaires latérales 240, 242, respectivement appelé première paroi 240 et seconde paroi 242.

La cavité 238 annulaire est en outre délimitée radialement par une paroi périphérique interne 246 et par une paroi périphérique externe 244.

La paroi 240 s'étend radialement entre les parois 244, 246. Les extrémités radialement internes des canalisations 143, 145 débouchent sur la paroi 244. Contrairement à la technique antérieure où l'alimentation du rouet 130 est radiale pour accumulation centrifuge, la cavité 238 du rouet 230 est ici fermée radialement à l'intérieur par la paroi 246. La paroi 246 est reliée à la paroi 240 et s'étend radialement à l'intérieur de la paroi 242, à distance radiale de celle-ci. La périphérie interne de la paroi 242 et la paroi 246 définissent ainsi entre elles une lumière annulaire 248 d'alimentation en huile de lubrification de la cavité 238.

La paroi 240 peut être considérée comme une paroi frontale dans la mesure où elle est située du côté de l'alimentation en huile de la cavité 238. La paroi 242 peut être considérée comme une paroi dorsale dans la mesure où elle est située du côté opposé à l'alimentation en huile de la cavité 238.

La cavité 238 peut comprendre un élément tronconique interne 254 qui est située en regard de la lumière 248.

L'élément tronconique 254 peut être une surface ou peut être formé par une surface. L'élément tronconique 254 est alors une surface tronconique.

En variante, l'élément tronconique 254 peut être formé par des bords inclinés d'ailettes 254a.

Chacune des ailettes 254a a une forme générale triangulaire et comprend un premier côté relié à la paroi 242, un second côté relié à la paroi 246, et un troisième côté qui est libre et incliné en s'étendant de la paroi 242 à la paroi 246.

Dans le cas où la cavité 238 ne comprendrait pas un élément tronconique 254, on comprend que la périphérie interne de la paroi 242 serait directement reliée à la paroi 246.

L'élément 254 peut avoir une dimension axiale L1 représentant au moins 25% voire 50% de la dimension axiale de la paroi 246 et pouvant même représenter plus de 100% de la dimension axiale de la paroi 246 dans la mesure où l'élément 254 peut s'étendre jusqu'à l'extérieur de la cavité 238 à travers la lumière 248.

Le double trait des figures 6 à 9 illustre un jet d'huile 258 projeté par un gicleur fixé à un stator de la turbomachine.

Le gicleur peut être légèrement incliné par rapport à l'axe A pour projeter le jet d'huile 258 dans la cavité 238, à travers la lumière 248 et en passant autour d'un rebord tronconique 300 de la périphérie interne du rouet 230. Ce jet d'huile 258 impacte l'élément 254 et/ou la paroi 246. Lorsque l'élément 254 est formé par des ailettes 254a, le jet d'huile 258 impacte la paroi 246 et l'huile est ensuite entrainée en rotation par les ailettes 254a en vue de sa centrifugation.

Le rebord 300 assure une collecte d'huile au niveau de la lumière 248 en formant une cuvette annulaire 302 à section en U ou en V.

Le rebord 300 s'étend autour de l'axe A et peut être formé par une première pièce annulaire 304 qui est rapportée et fixée axialement dans un corps annulaire 306 qui définit au moins une partie de la cavité 238 et des canalisations 143, 145.

Dans les dessins, on remarque que l'élément tronconique 254 a son extrémité longitudinale de plus petit diamètre qui est reliée à l'extrémité longitudinale de plus petit diamètre du rebord tronconique 300. L'extrémité longitudinale de plus grand diamètre du rebord 300 est libre et située du côté opposé à la cavité 238.

La paroi 242 est de préférence située axialement entre l'élément tronconique 254 et le rebord tronconique 300. La liaison entre les extrémités précitées de l'élément tronconique 254 et du rebord 300 est ainsi de préférence entourée par la paroi 242 et délimite la lumière 248 précitée avec la périphérie interne de cette paroi 242.

La lumière 248 a de préférence un diamètre interne D1 qui est supérieur au diamètre externe D2 du rebord tronconique 300.

Le rebord tronconique 300 peut avoir une dimension axiale L2 représentant entre 10 et 50%, et par exemple entre 20 et 30%, de la dimension axiale L1 de l'élément 254.

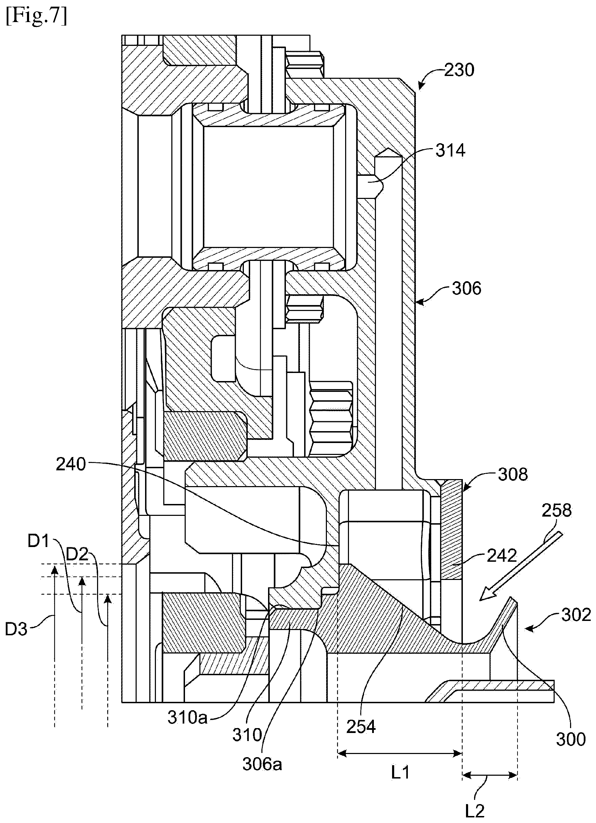

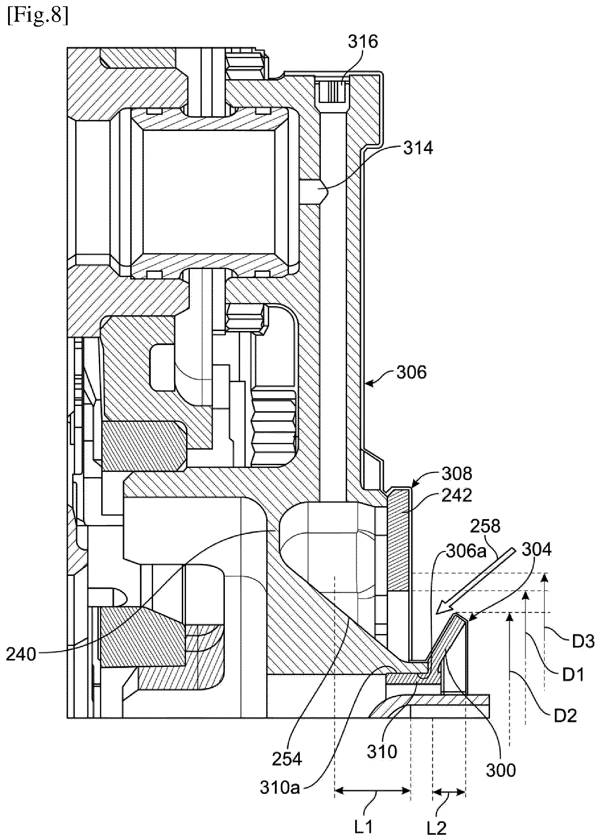

Le diamètre interne D1 de la lumière 248 est de préférence inférieur au diamètre externe D3 de l'élément tronconique 254, comme visible aux figures 7 et 8. En variante, le diamètre interne D1 de la lumière 248 peut être supérieur ou égal au diamètre externe D3 de l'élément tronconique 254, comme visible à la figure 6.

Dans le mode de réalisation des figures 6 et 7, l'élément tronconique 254 est formée par la première pièce 304. Dans le mode de réalisation de la figure 8, l'élément tronconique 254 est formée par le corps 306.

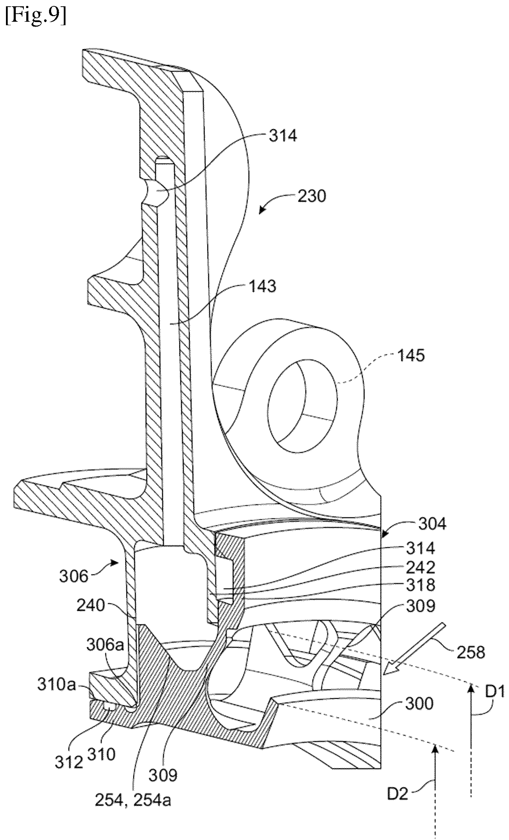

La paroi 242 peut être formée par le corps 306, comme c'est le cas à la figure 6, ou par la première pièce 304, comme c'est le cas à la figure 9, ou par une seconde pièce annulaire 308 rapportée et fixée axialement sur le corps 306, comme c'est le cas aux figures 6 et 8. Dans ce dernier, le rouet 230 est formé par l'assemblage de trois éléments annulaires, le corps 306 et les deux pièces 304, 308.

La pièce 304 ou les pièces 304, 308 peut/vent être fixée(s) au corps 306 par soudage ou vissage.

Dans les figures, on constate que les canalisations 143 communiquent avec des canaux axiaux 314 de passage d'huile. Aux figures 6, 7 et 9, les canalisations 143 sont bouchés à leurs extrémités radialement externes par le corps 306 lui-même. A la figure 8, les canalisations 143 sont bouchés à leurs extrémités radialement externes par des bouchons 316 rapportés en direction radiale. Cette dernière variante permet la réalisation des canalisations 143 par perçage du corps 306, radialement depuis l'extérieur. A la figure 9 où la première paroi 242 est formée par le corps 304, la première paroi 242 est en outre recouverte axialement par une virole d'étanchéité 318 associée au corps 304. Des doigts de liaison 309 associent cette virole 318 avec l'élément tronconique 254, et en particulier avec les bords libres des ailettes 254a précitées.

Le nombre de doigts 309 est égal au nombre d'ailettes 254a et chaque doit 309 est relié à une ailette 254a. Les ailettes 254a et les doigts 309 peuvent s'étendre dans des plans radiaux passant par l'axe X.

Les doigts 309 forment une rangée annulaire autour de l'axe X et traversent radialement la cavité 238 et/ou la lumière 248.

Pour faciliter le montage, ladite première pièce 304 comprend avantageusement un rebord cylindrique de centrage 310 qui comprend une surface cylindrique externe 310a apte à coopérer par centrage avec une surface cylindrique interne dudit corps 306a.

Les surfaces cylindriques 310a, 306a sont situées à la périphérie interne du rouet 230 dans l'exemple représenté.

Au moins un joint torique d'étanchéité 312 peut être monté dans une gorge annulaire de l'une des surfaces cylindriques, telles que la surface 310a, pour coopérer à étanchéité avec l'autre des surfaces cylindriques, telles que la surface 306a.

Au moins un joint torique d'étanchéité 314 peut être monté entre la virole 318 et la paroi 242 comme illustré à la figure 9.

Les gains apportés par le rouet de lubrification selon l'invention sont notamment :
- un encombrement radial réduit de la technologie,
- une augmentation de la pression d'huile dans le rouet,
- une meilleure collecte de l'huile,
- une fabrication facilitée, à iso performance et encombrement, etc.

## Revendications

1. Rouet (230) de lubrification pour un réducteur de vitesse (110) de turbomachine, en particulier d'aéronef, ledit rouet (230) étant destiné à être mis en rotation autour d'un axe (A) et ayant une forme générale annulaire autour dudit axe (A), le rouet comportant :
- à sa périphérie interne une cavité annulaire (238) de passage d'huile qui s'étend autour dudit axe (A),
- à sa périphérie interne une lumière annulaire (248) d'alimentation en huile qui s'étend autour dudit axe (A) et qui débouche en direction axiale dans ladite cavité (238) en vue de son alimentation en huile, et
- des canalisations (143, 145) de passage d'huile qui s'étendent radialement par rapport audit axe (A) et dont des extrémités radialement internes sont reliées à ladite cavité (238) en vue du passage d'huile par centrifugation depuis la cavité (238) jusque dans les canalisations (143, 145),
**caractérisé en ce que** la périphérie interne du rouet (230) comporte un rebord tronconique (300) de collecte d'huile au niveau de ladite lumière (248), et **en ce que** ce rebord tronconique (300) s'étend autour dudit axe (A) et est formé par une première pièce annulaire (304) rapportée et fixée axialement dans un corps annulaire (306) qui définit au moins une partie de la cavité (242) et des canalisations (143, 145).

2. Rouet (230) selon la revendication 1, dans lequel ladite cavité (238) comprend à sa périphérie interne un élément tronconique (254) qui s'étend autour dudit axe (A) et dont une extrémité longitudinale de plus petit diamètre est reliée à une extrémité longitudinale de plus petit diamètre dudit rebord tronconique (300).

3. Rouet (230) selon la revendication 2, dans lequel l'élément tronconique (254) est formée par ledit corps (306) ou par ladite première pièce (304).

4. Rouet (230) selon l'une des revendications précédentes, dans lequel ladite cavité (238) est délimitée axialement par deux parois latérales (240, 242) annulaires, une première (242) de ces parois ayant sa périphérie interne qui délimite intérieurement ladite lumière (248).

5. Rouet (230) selon la revendication 4 en dépendance de la revendication 2 ou 3, dans lequel ladite première paroi (242) est située axialement entre l'élément tronconique (254) et le rebord tronconique (300).

6. Rouet (230) selon la revendication 4 ou 5, dans lequel ladite première paroi (242) est formée par ledit corps (306) ou par ladite première pièce (304) ou par une seconde pièce annulaire (308) rapportée et fixée axialement sur ledit corps (306).

7. Rouet (230) selon la revendication 6, dans lequel, lorsque la première paroi (242) est formée par ladite première pièce (304), la première paroi (242) et la première pièce (304) sont reliées ensemble par une rangée annulaire de doigts de liaison (309) qui traversent radialement la cavité (238) et/ou la lumière (248).

8. Rouet (230) selon l'une des revendications 4 à 7 en dépendance de la revendication 2 ou 3, dans lequel une seconde des parois latérales (240) a sa périphérie interne qui est reliée à une extrémité longitudinale de plus grand diamètre dudit élément tronconique (254).

9. Rouet (230) selon l'une des revendications précédentes, dans lequel ladite première pièce (304) comprend un rebord cylindrique de centrage (310) qui comprend une surface cylindrique externe (310a) apte à coopérer par centrage avec une surface cylindrique interne dudit corps (306a).

10. Rouet (230) selon la revendication 9, dans lequel lesdites surfaces cylindriques (310a, 306a) sont situées à la périphérie interne du rouet (230).

11. Rouet (230) selon la revendication 9, dans lequel au moins un joint torique d'étanchéité (312) est monté dans une gorge annulaire de l'une des surfaces cylindriques (310a) pour coopérer à étanchéité avec l'autre des surfaces cylindriques (306a).

12. Rouet (230) selon l'une des revendications précédentes, dans lequel ladite première pièce (304) est fixée au corps (306) par soudage ou vissage.

13. Rouet (230) selon l'une des revendications précédentes, dans lequel la lumière (248) a un diamètre interne (D1) qui est supérieur au diamètre externe (D2) du rebord tronconique (300).

14. Rouet (230) selon la revendication 13 en dépendance de la revendication 2 ou 3, dans lequel le diamètre interne (D1) de la lumière (248) est inférieur à un diamètre externe (D3) dudit élément tronconique (254).

15. Réducteur de vitesse (110) pour une turbomachine (100), ce réducteur (110) comportant un solaire (111) mobile en rotation autour d'un axe (A), une couronne (114) qui s'étend autour de l'axe (A) et du solaire (111), et des satellites (112) qui sont situés entre le solaire (111) et la couronne (114) et engrenés avec le solaire (111) et la couronne (114), les satellites (112) étant portés par un porte-satellites (113) qui est centré sur l'axe (A) et qui est mobile en rotation autour de cet axe (A), dans lequel un rouet (230) selon l'une des revendications précédentes est fixé coaxialement au porte-satellites (113) en vue de la lubrification des satellites (112) et/ou des engrènements.

16. Turbomachine (100), en particulier d'aéronef, comportant un réducteur (110) selon la revendication précédente ainsi qu'au moins un gicleur d'huile qui est configuré pour projeter un jet d'huile (258) dans ladite cavité (238), en traversant axialement ladite lumière (248) et en passant radialement à l'extérieur du rebord tronconique (300).
